(19) **Europäisches Patentamt / European Patent Office / Office européen des brevets**

(11) **EP 0 457 455 B2**

(12) **NEW EUROPEAN PATENT SPECIFICATION**

(45) Date of publication and mention
of the opposition decision:
**02.07.2008 Bulletin 2008/27**

(45) Mention of the grant of the patent:
**03.07.1996 Bulletin 1996/27**

(21) Application number: **91303886.5**

(22) Date of filing: **30.04.1991**

(51) Int Cl.:
***C08F 297/08*** (2006.01)     ***C08L 23/04*** (2006.01)
***C08L 23/12*** (2006.01)

(54) **Polymer compositions**

Polymerzusammensetzungen

Compositions de polymères

(84) Designated Contracting States:
**AT BE CH DE DK ES FR GB GR IT LI LU NL SE**

(30) Priority: **14.05.1990 US 522692**

(43) Date of publication of application:
**21.11.1991 Bulletin 1991/47**

(73) Proprietor: **UNION CARBIDE CHEMICALS &
PLASTICS TECHNOLOGY
CORPORATION
Danbury,
Connecticut 06817-0001 (US)**

(72) Inventors:
• **McCullough, James Douglas, Jr.
Houston,
Texas 77079 (US)**
• **Ficker, Harold Kurt
Wayne,
New Jersey 07470 (US)**

(74) Representative: **Hayes, Adrian Chetwynd et al
Boult Wade Tennant,
Verulam Gardens
70 Gray's Inn Road
London WC1X 8BT (GB)**

(56) References cited:
EP-A- 0 316 693     EP-A- 0 433 990
EP-A- 0 863 183     EP-A1- 0 086 300
EP-A1- 0 298 453     EP-A2- 0 103 987
EP-A2- 0 202 946     EP-A2- 0 280 297
EP-A2- 0 373 660     GB-A- 2 025 994
JP-A- 3 184 689     JP-A- 11 261 288
JP-A- 63 146 953     US-A- 3 960 987

• **Rubber Chemistry and Technology, 1972, 45, pp.
709-711, 732-33, 750-755**
• **J.Macromol.Sci.Phys. 1981, B81, p. 523**
• **B. Jang et al, ANTEC '84, p. 549**
• **Polymer, 1984, 25, p. 279**
• **Reihe "Kunststofftechnik", Düsseldorf, VDI-
Verlag, 1989, pp. 77-103**
• **Römpp Chemie Lexikon, 9.Auflage 1990, p. 2183**
• **Polypropylene Handbook, Hanser publisher,
1996, p.149**
• **Polymer, 1987, 28, pp. 1929-1936**
• **American Chem. Soc. 1979, 12(1). pp. 65-68**
• **"Studies in Polymer Science7", 1990, Elsevier,
Amsterdam, pp. 316-321**
• **Journal of Applied Polymer Science, 1970, 14, pp.
1651-1653**

EP 0 457 455 B2

**Description**

This invention relates to propylene polymer compositions of good impact strength and stiffness and also of improved resistance to stress whitening, particularly compositions produced by gas phase polymerization.

Propylene polymer compositions have gained wide commercial acceptance in numerous commercial applications because of their relatively low cost and desirable properties. In general, propylene polymers, particularly propylene homopolymers, have the disadvantage of being brittle with low impact resistance, especially at low temperatures. Numerous proposals have been made for modifying the properties of propylene homopolymers to improve impact strength and other low temperature. properties. Many if not most of such proposals have included the provision of a propylene/α-olefin copolymer portion in otherwise homopolymeric polypropylene. The structure of such modified polypropylene polymers is variable, but somewhat uncertain. In US-A-3,514,501, there is described a process for the production of block copolymers wherein, for example, a prepolymer which is homopolymeric polypropylene is produced and a block of at least one α-olefin is grown from the prepolymer in a second polymerization step. A second approach to providing improved impact strength comprises mixing a propylene homopolymer with a propylene/ethylene copolymer. Most proposals, and most commercial products of high impact strength, result from the production of a first polymer, usually a propylene homopolymer, and the production of a copolymeric portion in the presence of the initial polymer product mixture which still contains active polymerisation sites. Whether the resulting product is a block copolymer, a mixture of homopolymer and copolymer or is of other structure is not entirely clear. However, such products are well known and conventional in the art and have achieved considerable commercial importance. They are often referred to as polypropylene impact copolymers, regardless of the precise nature of their structure, and are said to contain a homopolymer phase (often hompolymeric polypropylene) and a rubber phase (the copolymer portion).

While such a polypropylene impact copolymer does exhibit improved low temperature impact strength and other improved low temperature properties as well as many of the desirable properties of the homopolymer such as stiffness, the impact copolymer compositions may exhibit considerable stress whitening under circumstances such as a) ejecting parts from molds (knock-out pin marks); b) the forming of shaped articles from sheet stock at temperatures in the vicinity of melting and below; and c) the general situation of impacting or bending of fabricated parts either during their production or assembly, or in their intended application.

Various procedures have been described which are designed to produce compositions having good low temperature properties and better resistance to stress whitening. Many of these procedures include an extra processing step or the inclusion within the composition of an extra component. In EP-A-208,330 there are disclosed compositions said to have improved resistance to stress whitening which comprise homopolymeric polypropylene or peroxide-degraded polypropylene which have a grafted ethylene/propylene copolymer portion, and as an additional component, an ester derived from a monocarboxylic acid of 12-20 carbon atoms and a polyhydric alcohol. In JP-A-84020522/04 there is described a mixture of polypropylene of specified melt flow and an ethylene/α-olefin copolymer wherein the molecular weight of the polypropylene has been reduced substantially by treatment with peroxide. The compositions are said to have resistance to stress whitening as well as improved gloss and transparency, although in many other instances the reduction of molecular weight by peroxide treatment, a process known as visbreaking, served to increase rather than decrease stress whitening. It would be of advantage to provide improved propylene polymer compositions characterized by good low temperature properties such as impact strength and also good resistance to stress whitening.

EP-A-433,990 is prior art under EPC 54 (3/4). In example 4, a composition is prepared consisting of 72 weight percent of a propylene homopolymer phase containing 0.5 weight percent ethylene and having an intrinsic viscosity of 1.87 dl/g (viscosity number of 195 cm$^3$/g) and 28 weight percent of a propylene copolymer phase containing 39 weight percent of ethylene and having an intrinsic viscosity of 2.16 (viscosity number of 227 cm$^3$/g). This composition is excluded from claim 1.

According to the invention there is provided a polypropylene impact composition which comprises a homopolymer phase predominantly comprising a propylene homopolymer and from 10% to 50% based on the weight of the total impact copolymer composition of a copolymer phase predominantly comprising a copolymer of ethylene and propylene wherein the copolymer phase contains from 35 to 50% by weight of ethylene based on total copolymer phase, and wherein the ratio of the intrinsic viscosity of the copolymer phase to that of the homopolymer phase is from 1.0/1 to 1.3/1, the intrinsic viscosities being determined according to ASTM D 1601-78 in decalin at 135°C, that of the copolymer phase ($[\eta]_{copol}$) being derived from the intrinsic viscosity of the composition ($[\eta]_{prod}$) in accordance with the formula

$$[\eta]_{copol} = \frac{[\eta]_{prod} - (1-F_c)\ [\eta]_{homo}}{F_c}$$

where ($[\eta]_{homo}$) is the intrinsic viscosity of the homopolymer phase and $F_c$ is the fraction of the composition which is copolymer; with the proviso that the composition does not consist of 72 weight percent of a propylene homopolymer phase containing 0.5 weight percent ethylene and having an intrinsic viscosity of 1.87 dl/g and 28 weight percent of a propylene copolymer phase containing 39 weight percent of ethylene and having an intrinsic viscosity of 2.16.

There is also provided a polypropylene impact composition which comprises a homopolymer phase predominantly comprising a propylene homopolymer, from 10% to 50% based on the weight of the total impact copolymer composition of a copolymer phase predominantly comprising a copolymer of ethylene and propylene wherein the copolymer phase contains from 35 to 50% by weight of ethylene based on total copolymer phase, and wherein the ratio of the intrinsic viscosity of the copolymer phase to that of the homopolymer phase is from 1.0/1 to 1.3/1, the intrinsic viscosities being determined according to ASTM D 1601-78 in decalin at 135°C, that of the copolymer phase ($[\eta]_{copol}$) being derived from the intrinsic viscosity of the composition ($[\eta]_{prod}$) in accordance with the formula

$$[\eta]_{copol} = \frac{[\eta]_{prod} - (1-F_c)\ [\eta]_{homo}}{F_c}$$

where ($[\eta]_{homo}$) is the intrinsic viscosity of the homopolymer phase and $F_c$ is the fraction of the composition which is copolymer;
and wherein the polypropylene impact composition further comprises a nucleating agent.

There is further provided a process for preparing a polypropylene impact composition which comprises a homopolymer phase predominantly comprising a propylene homopolymer and from 10% to 50% based on the weight of the total impact copolymer composition of a copolymer phase predominantly comprising a copolymer of ethylene and propylene wherein the copolymer phase contains from 35 to 50% by weight of ethylene based on total copolymer phase, and wherein the ratio of the intrinsic viscosity of the copolymer phase to that of the homopolymer phase is from 1.0/1 to 1.3/1, the intrinsic viscosities being determined according to ASTM D 1601-78 in decalin at 135°C, that of the copolymer phase ($[\eta]_{copol}$) being derived from the intrinsic viscosity of the composition ($[\eta]_{prod}$) in accordance with the formula

$$[\eta]_{copol} = \frac{[\eta]_{prod} - (1-F_c)\ [\eta]_{homo}}{F_c}$$

wherein ($[\eta]_{homo}$) is the intrinsic viscosity of the homopolymer phase and $F_c$ is the fraction of the composition which is copolymer;
wherein a two-stage gas-phase polymerization process is carried out wherein predominantly propylene is initially polymerized to form the homopolymer phase and the product of the initial polymerization is contacted with a mixture of propylene and ethylene to form the copolymer phase, the polymerizations being conducted in the presence of an olefin polymerization catalyst and the molecular weight of at least one of the homopolymer phase and the copolymer phase being controlled to provide said intrinsic viscosity ratio.

These compositions have improved resistance to stress whitening as well as the good impact strength and stiffness normally associated with polypropylene impact copolymers.

The compositions of the invention can be produced by gas phase polymerization procedures which are broadly conventional and the compositions are characterized by a numerical ratio of the intrinsic viscosity of the copolymer portion to the intrinsic viscosity of the homopolymer portion which is near unity. The precise intrinsic viscosity of either individual portion is not material so long as the ratio of intrinsic viscosities is within the desired range.

Optionally, the compositions of the invention may contain nucleating agents such as sodium benzoate. It is well known that the addition of a nucleating agent to polypropylene impact copolymers will improve the stiffness, but generally mixed results have been obtained with regard to impact properties. It is shown with compositions according to this invention that nucleating with small amounts, e.g. 50-2000 ppm, of sodium benzoate, not only increases stiffness but also increases notched Izod impact strength.

The term intrinsic viscosity as used herein is used in its conventional sense to indicate the viscosity of a solution of a material, in this case a solution of a polymer, in a given solvent at a given temperature, when the polymer is at infinite dilution. According to the ASTM standard test method D 1601-78, its measurement involves a standard capillary viscosity measuring device, in which the viscosity of a series of concentrations of the polymer in the solvent at the given temperature are determined. In the case of the polymers of the present invention, decalin (decahydronaphthalene) is a suitable solvent and a typical temperature is 135°C. From the values of the viscosity of solutions of varying concentration, the "value" at infinite dilution can be determined by extrapolation. In the case of the polypropylene impact copolymers of the invention, the homopolymer portion preferably is initially produced and the intrinsic viscosity of that portion is measured directly. The intrinsic viscosity of the subsequently produced copolymer portion cannot be measured directly. The intrinsic viscosity of the total composition $[\eta]_{prod}$ is determined and the intrinsic viscosity of the copolymer portion thereof $[\eta]_{copol}$ is calculated as the quotient of the intrinsic viscosity of the total composition less the fraction of homopolymer times its intrinsic viscosity $[\eta]_{homo}$, all divided by the fraction of the total composition which is copolymer. The formula is

$$[\eta]_{copol} = \frac{[\eta]_{prod} - (1-F_c)\,[\eta]_{homo}}{F_c}$$

where $F_c$ is the fraction of the composition which is copolymer. The fraction $F_c$ can be determined by conventional procedures involving infrared analysis or reactor heat balance.

The composition of the invention is obtainable by a polymerization process conducted in a gas phase in the presence of a stereoregular olefin polymerization catalyst. Such catalysts are broadly well known and conventional and are employed in the polymerization of $\alpha$-olefins of three or more carbon atoms to produce stereoregular products. In terms conventionally employed to describe such catalysts, the stereoregular catalysts of high catalytic activity contain as a first constituent a procatalyst which is a titanium-containing solid, usually a titanium halide-containing solid, and which often contains an electron donor. Suitable electron donors which may be used in the preparation of the solid catalyst component are ethers, esters, ketones, phenols, amines, amides, imines, nitriles, phosphines, phosphites, stilbenes, arsines, phosphoramides and alcoholates. The electron donors may be used singly or in combination. Preferred electron donors for use in preparing the titanium constituent are aromatic esters such as ethyl benzoate and isobutyl phthalate. The second catalyst constituent, termed a co-catalyst, is an organoaluminum compound which may be partly or totally complexed with a third catalyst constituent, conventionally termed a selectivity control agent.

Aromatic esters, amines, hindered amines, esters, phosphites, phosphates, aromatic diesters, alkoxy silanes, aryloxy silanes, silanes, hindered phenols and mixtures of two or more thereof can be used as the selectivity control agent.

Such stereoregular olefin polymerization catalysts are described in numerous patents and other references including US-A-4,728,705. Although various chemical compounds are useful as the constituents of the polymerization catalysts, a typical stereoregular olefin polymerization catalyst contains as procatalyst a solid comprising a magnesium halide, a titanium halide and an electron donor such as ethyl benzoate. The halide moieties of such procatalysts are customarily chloride moieties. The co-catalyst is typically triethylaluminum or triisobutylaluminum which is often at least partially complexed with an aromatic ester such as ethyl p-ethoxybenzoate, ethyl p-methoxybenzoate or methyl p-methylbenzoate as the selectivity control agent, or a silane such as diisobutyl dimethoxy silane. Use of a catalyst of this type results in a stereoregular polymeric product when olefins of three or more carbon atoms are polymerized and many of the catalysts are recognized as high activity catalysts capable of producing polymers of desirable properties without the necessity of removing catalyst residues in a de-ashing step.

These catalysts are used in established processes to polymerize or copolymerize $\alpha$-olefins. The processes may employ a liquid, non-polymerizable diluent or alternatively may employ as liquid diluent a monomer of the polymerization. To produce the impact copolymers of the invention, however, it is desirable to utilize a gas phase process, particularly when producing compositions of high melt flow. To obtain impact copolymers having an intrinsic viscosity ratio within the desired limits when polymers of high melt flow are produced, polymer of low molecular weight must be present in the reactor system. This low molecular weight material, particularly when ethylene/propylene copolymer is produced, serves as a sticky binding agent and in liquid-phase systems will generally cause substantial reactor fouling and possible loss of otherwise active material with removed solvent or diluent. In liquid systems this lower molecular weight material must be avoided and it is difficult therefore to produce a product in which the ratio of intrinsic viscosities of the homopolymer and copolymer portions is within the desired numerical limits (see for example EP-A-225,099).

Various gas phase polymerization processes are known but one such process which can suitably be used to produce the impact copolymer products of the invention is described in US-A-4,379,759 and involves a fluidized bed, gas phase system.

A gas phase process is typically operated by charging to a suitable reactor an amount of preformed polymer particles and a lesser amount of solid catalyst particles. The olefin(s) to be polymerized as a gas is (are) passed through the bed of particles at a high rate and under conditions of temperature and pressure sufficient to initiate polymerization. Upon passing through the particle bed the unreacted gas is withdrawn from the reactor and recycled together with make-up feed gas. As catalyst is lost through incorporation of minute amounts of catalyst within the polymer product, additional catalyst is provided to the reactor, often through the use of an inert transport gas such as nitrogen or argon. The reaction temperature is selected to be below the sintering temperature of the polymer particles and is controlled by an external heat exchanger in the gas cycle. Reaction temperatures from 30°C to 120°C may be used with reaction temperatures from 50°C to 90°C being more commonly used. The reaction pressure is generally up to 6.9 MPa (1000 psi) with pressures from 0.69 to 27.6 MPa (100 psi to 400 psi) being preferred. The precise control of reaction conditions as well as the addition of catalyst and feed gas and the recycle rate of unreacted monomer is within the skill of the art. An additional means of reaction and product control is achieved by the provision for the addition of molecular hydrogen to the reactor and thus the polymerization system. The addition of molecular hydrogen serves to control the molecular weight of the product, most likely by functioning as a chain transfer agent. Control of molecular weight of the polymeric product also in part determines the intrinsic viscosity of the product which is, of course, of particular importance in the case of the impact copolymers of the invention. The use of hydrogen to control polymer molecular weight and thus product intrinsic viscosity is also within the skill of the art.

The desired polymer products are obtained as particulate matter formed by growth of polymer product on the polymer particles provided to the fluidized bed or as particles formed in the reactor. The product particles are removed from the reactor at a rate which is substantially equivalent to the rate of polymer production and are passed to a subsequent reaction zone or are finished by conventional methods prior to use.

It is conceivable, although impractical, to produce the impact copolymers of the invention in a single reactor by control of the composition of feed gas and recycle of unreacted monomer and polymeric product. However, it is more common to operate the gas phase process for the production of the compositions of the invention in a two-stage process wherein each stage operates in the gas phase in a separate reactor. In such a modification, the homopolymer portion of the impact copolymer is initially produced as described above in a suitable gas phase reactor which generally but not necessarily employs hydrogen to control the molecular weight of the product and thus the intrinsic viscosity of this product. This initial homopolymer product containing active catalyst sites is then passed to a second gas phase reactor containing a second fluidized bed. A portion of unreacted monomer from the initial polymerization step is also passed to the second reactor together with the monomers to be employed in the production of the copolymer phase. The production of copolymer or rubber phase takes place in the second reactor where it may also be desirable to provide molecular hydrogen to control molecular weight and thus intrinsic viscosity. Two or more gas phase homopolymer or copolymer reactors could be used in various sequential or parallel arrangements, involving production of homopolymer and copolymer, as long as the intrinsic viscosity ratio requirements are met.

The homopolymer phase of the composition of the invention is predominantly but not necessarily propylene homopolymer. To obtain particular properties for special applications it may be desirable to incorporate in the otherwise homopolymer portion of the impact copolymer compositions a small amount, e.g. up to 6% by weight, of a second $\alpha$-olefin such as ethylene, 1-butene or even a higher molecular weight $\alpha$-olefin. The incorporation of the optional small amounts of other $\alpha$-olefin is by convention methods and serves to modify but not substantially alter the properties of the homopolymer phase. In the embodiments where a small amount of other $\alpha$-olefin is provided the product, although technically a copolymer, is still referred to as the homopolymer phase. Such homopolymer phases which are substantially entirely polypropylene, i.e. phases produced in the substantial absence of second $\alpha$-olefin, are preferred.

The second phase or copolymer phase typically comprises predominantly a copolymer of ethylene and propylene although small amounts of other $\alpha$-olefin moieties could optionally be present. Through control of the proportion of unreacted propylene from the initial reactor and the proportion of ethylene provided to the copolymerization reactor it is possible, and conventional, to vary the proportion of ethylene in the ethylene/propylene copolymer fraction. Within the impact copolymers of the invention the proportion of ethylene in the copolymer phase is 35% to 50%, by weight based on total copolymer phase. It is also known to control the relative proportions of homopolymer phase and copolymer phase in the impact copolymer product. The copolymer or rubber phase constitutes from 10% to 50%, preferably 10% to 40%, by weight of the total polymeric impact copolymer composition.

The products of the invention are therefore polypropylene impact copolymers, preferably produced by gas phase polymerization, usually involving hydrogen to control molecular weight, wherein the numerical ratio of the intrinsic viscosity of the copolymer phase to the homopolymer phase is near unity. Numerical ratios of the intrinsic viscosities from 1.0/1 to 1.3/1 are satisfactory for non-visbroken products, with ratios from 1.0/1 to 1.2/1 being preferred. The intrinsic viscosity of either phase or of the impact copolymer product is not material, so long as the ratio is satisfactory, although intrinsic viscosities of the products or phases typically are from 0.7 to 7 dl/g when measured in decalin at 135°C.

Described in different terms, the impact copolymers produced by typical gas phase processes as described above will have melt flows, as determined by a conventional test procedure such as ASTM-1238 Cond. L of from 0.2 to 70. For some particular product applications, it is desirable to have impact copolymers of higher melt flow or lower molecular weight. Increase of the melt flow of a polyolefin polymeric product is frequently done by the mentioned use of hydrogen; however, it is also possible to increase the melt flow by the treatment of an impact copolymer with peroxide, that is by "visbreaking". The desired improvement of low temperature properties and resistance to stress whitening are obtained in impact copolymers of higher melt flow produced by visbreaking when the intrinsic viscosity ratio of the phases of the impact copolymer to be treated with peroxide is within the desired numerical limits. With visbreaking, stress whitening increases with peroxide usage level. For this reason, the upper limit of viscosity ratio for visbroken products is 1.2/1 for good stress whitening performance, and an upper limit of 1.1/1 is preferred. A preferred range of viscosity ratios is 1/1 to 1.1/1. Typical melt flows for visbroken polymers are from 2 to 200.

Nucleating agents allow the polymers to be crystallized at a higher temperature during injection molding and blow molding operations. It has been found that the addition of small amounts, e.g. 50-2000 ppm, of sodium benzoate not only increases stiffness but also increases notched Izod impact strength.

Nucleating agents may include aromatic carboxylic acids and their derivatives, e.g. sodium benzoate, aluminum p-tert-butyl benzoate and aluminum benzoate, metal organic phosphates, e.g. sodium di(4-t-butylphenyl)phosphate, benzylidene sorbitol derivatives, talc, polyvinyl cycloalkanes, e.g. polyvinyl cyclohexane, and certain organic dicarboxylic acid derivatives, e.g. sebacic acid.

The compositions of the invention as well as the peroxide-treated (visbroken) derivatives thereof are characterized by the good impact resistance and other good low temperature properties of convention polypropylene impact copolymers. However, in contrast with conventional polypropylene impact copolymers, the compositions exhibit improved resistance to stress whitening which is of importance when the polymer is employed to produce final products where outward appearance is important. The polymeric compositions may incorporate a variety of the additives such as stabilizers, antioxidants, fillers, colorants, other nucleating agents and mold release agents which are conventionally employed in commercial polypropylene compositions. The compositions can be processed by conventional procedures used for thermoplastic materials such as injection molding, extrusion, thermoforming and related processes. Better gloss is often seen on fabricated articles. Among particular applications for the compositions are the production of molded and extruded automotive parts, small appliance housings, film of improved clarity and gloss as well as improved low temperature toughness for applications such as stackable trays and luggage.

The invention will be further illustrated by reference to the following Examples.

Example I

A number of samples of polypropylene impact copolymer, both within and without the scope of the invention, were produced and an injection molded disk 6.4cm (2.5in) in diameter by 0. 32cm (0.125in) thick, was prepared from each sample. The stress whitening of each sample was measured in a standard Gardner impact apparatus with the ring removed, by dropping a weight upon each disk from a determined height and measuring the diameter of the white spot on the opposite side on each disk caused by the impact of the weight (all tests run after 24 hours after molding). A 0.91 kg (2lb) weight was used from heights of 12.7 and 25.4cm (5 and 10 inches) to obtain impacts of 11.52 kg-cm and 23.04 kg-cm (10 in-lb and 20 in-lb) respectively. In this and other examples the intrinsic viscosity ratio ("ratio") was conveniently calculated from the following relationship;

$$\text{Ratio} = 1 + \frac{(MF_{homo}/MF_{whole})^{0.213} - 1}{F_c}$$

where $MF_{homo}$ is the melt flow of the homopolymer, $MF_{whole}$ is the melt flow of the polypropylene impact copolymer, and $F_c$ is the fraction of the polypropylene impact copolymer which is the ethylene/propylene copolymer rubber. The results are shown in Table I.

It is evident that stress whitening improves as the value for the ratio decreases toward unity.

## TABLE I

| Sample No. | Melt Flow g/s (dg/min) | Intrinsic Viscosity Ratio 2/1 | Copolymer Rubber Fraction Fc wt% | Ethylene Content of Rubber Ec wt% | Gardner Impact[1] -30°C kg-cm (in-lb) | Notched Izod -20°C J/cm (ft-lb/in) | Stress Whitening[2] Diameter cm (in) 11.52kg-cm (10 in-lb) | 23.04kg-cm (20 in-lb) |
|---|---|---|---|---|---|---|---|---|
| 1 | $7.67 \times 10^{-3}$ (4.6) | 1.4 | 23.6 | 53.3 | 199 (173) | 0.37 (0.7) | 1.02 (0.40) | 1.42 (0.56) |
| 2 | $8.00 \times 10^{-3}$ (4.8) | 1.2 | 26.2 | 35.1 | 289 (251) | 0.37 (0.7) | 0.84 (0.33) | 1.24 (0.49) |
| 3 | $8.17 \times 10^{-3}$ (4.9) | 1.5 | 19.6 | 52.9 | 143 (124) | 0.37 (0.7) | 1.12 (0.44) | 1.63 (0.64) |
| 4 | $6.67 \times 10^{-4}$ (0.4) | 1.2 | 16.9 | 40.1 | 241 (209) | 0.64 (1.2) | 0.89 (0.35) | 1.22 (0.48) |
| 5 | $5.00 \times 10^{-4}$ (0.3) | 1.2 | 21.7 | 53.6 | 406 (352) | 1.07 (2.0) | 0.99 (0.39) | 1.47 (0.58) |
| 6 | $5.00 \times 10^{-4}$ (0.3) | 1.3 | 17.6 | 41.1 | 219 (190) | 0.75 (1.4) | 1.04 (0.41) | 1.42 (0.56) |
| 7 | $3.33 \times 10^{-4}$ (2.0) | 1.3 | 27.0 | 29.6 | 252 (219) | 0.64 (1.2) | 1.07 (0.42) | 1.42 (0.56) |
| 8 | $3.00 \times 10^{-3}$ (1.8) | 1.3 | 16.3 | 56.8 | 131 (114) | 0.43 (0.8) | 1.14 (0.45) | 1.45 (0.57) |
| 9 | $2.67 \times 10^{-3}$ (1.6) | 1.4 | 20.4 | 36.3 | 157 (136) | 0.69 (1.3) | 1.12 (0.44) | 1.47 (0.58) |
| 10 | $1.85 \times 10^{-2}$ (11.1) | 1.8 | 24.4 | 49.5 | 199 (173) | 0.48 (0.9) | 1.35 (0.53) | 1.73 (0.68) |
| 11 | $2.37 \times 10^{-2}$ (14.2) | 1.3 | 20.0 | 29.2 | 11.5 (10) | 0.21 (0.4) | 0.94 (0.37) | 1.37 (0.54) |
| 12 | $2.37 \times 10^{-2}$ (14.2) | 1.7 | 27.7 | 49.0 | 232 (201) | 0.53 (1.0) | 1.37 (0.54) | 1.75 (0.69) |

[1] Ring in; 6.35cm x 0.32cm (2.5in x 0.125in) disk

[2] Ring out; 6.35cm x 0.32cm (2.5in x 0.125in) disk

Example II

Samples of polypropylene impact copolymer were produced and evaluated for stress whitening as described in Example I (with stress whitening measurements conducted after 24 hours) as well as for impact properties in a conventional Gardner -30°C impact test (ASTM D 3029, Procedure G). The results are shown in Table II.

**TABLE II**

| Sample | Melt Flow (dl/g) | Ratio | Gardner Impact (-30°C) kg-cm (in-lb) | Stress Whitening[1], cm (in) | |
|---|---|---|---|---|---|
| | | | | 11.52 kg-cm (10 in-lb) | 23.04 kg-cm (20 in-lb) |
| A | 1.9 | 1.1 | >346 (>300) | 1.27 (0.50) | 1.47 (0.58) |
| B | 1.9 | 1.1 | 207 (180) | 1.14 (0.45) | 1.50 (0.59) |
| C | 4.8 | 1.1 | >346 (>300) | 1.32 (0.52) | 1.60 (0.63) |
| D | 4.5 | 1.1 | 190 (165) | 1.57 (0.62) | 1.91 (0.75) |

[1] Ring out; 10.16 cm x 0.32 cm (4 in x 0.125 in) disk.

Example III

Polypropylene impact copolymer samples were produced in a large scale unit. Certain of the samples, Samples 2, 4 and 5, were visbroken after production. Injection molded test specimens were produced from each sample and the properties of the samples were determined by standard test procedures except for stress whitening which was determined by the procedure of Example I. The results are shown in Table III. It is seen that the stress whitening is improved for Sample 1 versus Sample 3 at 23.04 kg-cm (20 in-lb), even allowing for the much higher $F_c$ for Sample 1 (stress whitening trends upward with increasing $F_c$). Further, for visbroken Samples 2, 4 and 5, stress whitening is markedly improved for Sample 2.

**TABLE III**

| Sample | 1 | 2 | 3 | 4 | 5 |
|---|---|---|---|---|---|
| Visbroken | no | yes | no | yes | yes |
| %wt copolymer ($F_c$) | 20.3 | 20.5 | 15.3 | 22.1 | 18.1 |
| %wt ethylene in copolymer ($E_c$) | 46.5 | 47.3 | 49.3 | 59.6 | 60.7 |
| Ratio (before visbreaking) | 1.2 | 1.2 | 1.5 | 1.5 | 1.5 |
| Melt Flow g/s | $1.33 \times 10^{-2}$ | $2.80 \times 10^{-2}$ | $1.30 \times 10^{-2}$ | $2.37 \times 10^{-2}$ | $1.25 \times 10^{-2}$ |
| (dg/min) | (8.0) | (16.8) | (7.8) | (14.2) | (7.5) |
| Notched Izod, J/cm (ft.lb/in) -20°C | 0.53 | 0.40 | 0.34 | 0.63 | 0.52 |
| | (1.00) | (0.75) | (0.63) | (1.18) | (0.97) |
| Gardner Impact, kg-cm (in-lb) -30°C | 265 | 248 | 188 | 288 | 233 |
| | (230) | (215) | (163) | (250) | (202) |
| Flex. Mod., Tan. Pa | 862 | 758 | 1117 | 751 | 841 |
| ($\times 10^{-3}$, psi) | (125) | (110) | (162) | (109) | (122) |
| 0.127 cm/min (0.05 in/min) | | | | | |
| Weld Line Strength, % elong. to break | 4.0 | 4.1 | 3.3 | 4.1 | 3.1 |
| Stress Whitening, Diam. cm (in) | | | | | |

(continued)

| Sample | | 1 | 2 | 3 | 4 | 5 |
|---|---|---|---|---|---|---|
| 11.52 kg-cm | | 1.63 | 1.70 | 1.57 | 2.06 | 1.96 |
| (10 in-lb) | | (0.64) | (0.67) | (0.62) | (0.81) | (0.77) |
| 23.04 kg-cm | | 1.85 | 2.03 | 2.11 | 2.39 | 2.21 |
| (20 in-lb) | | (0.73) | (0.80) | (0.83) | (0.94) | (0.87) |

Example IV

The samples in Example III were examined for stress whitening in a test which involved bending tensile test specimens (16.5 cm (6.5 in.) length x 1.27 cm (0.5 in.) x 0.32 cm (0.125 in.) ASTM tensile bars). In the test a tensile bar would be flexed 180 degrees about its midsection so that the ends touched; it would then be straightened, and flexed 180 degrees in the other direction. This would be done ten times, with the bending rate being in the normal range for convenient flexing (a few seconds per test). Stress whitening measurements are made at least 24 hours after testing.
The ranking of materials is as follows:

| Sample | | 1 | 2 | 3 | 4 | 5 |
|---|---|---|---|---|---|---|
| Length of Whitened Area (measured at midpoint), | cm | 2.03 | 1.02 | 2.79 | 2.03 | 2.03 |
| | (in) | (0.8) | (~0.4) | (1.1) | (0.8) | (0.8) |
| Whitening Intensity[1]: | | L | VL | H | H | M |
| [1] H = High, M = Moderate, L = Low, VL = Very Low | | | | | | |

In this test, it is seen that the low intrinsic viscosity ratio samples, 1 and 2, are markedly better than the other samples in terms of reduced stress whitening.

Example V

Samples of a polypropylene impact copolymer were taken from a run (RUN 12FDHX-76) at a South Charleston pilot plant:

| Sample No. | | 1 | 2 | 3 | 4 |
|---|---|---|---|---|---|
| $F_c$ | | 20 | 14.7 | 16.9 | 18.6 |
| $E_c$ | | 56 | 57 | 62 | 63 |
| MF dl/g | | 1.9 | 2.0 | 10.4 | 10.6 |
| Ratio | | 1.15 | 1.5 | 1.14 | 1.5 |
| Gardner[1] -30°C | kg-cm | 248 | 190 | 196 | 240 |
| | (in-lb) | (215) | (165) | (170) | (208) |
| Stress Whitening[2] cm (in) | | | | | |
| 11.52 kg-cm | | 1.35 | 1.42 | 1.42 | 1.63 |
| (10 in-lb) | | (0.53) | (0.56) | (0.56) | (0.64) |
| 23.04 kg-cm | | 1.65 | 1.68 | 1.73 | 1.88 |
| (20 in-lb) | | (0.65) | (0.66) | (0.68) | (0.74) |
| [1] Ring in; 5.08cm x 0.32cm (2in x 0.125in) disk | | | | | |
| [2] Ring out; 10.16cm x 0.32cm (4in x 0.125in) disk | | | | | |

Data were developed in accordance with Examples I and II.
Comparisons are made of the 2 melt flow (nominal) samples 1 and 2, and of the 10 melt flow (nominal) materials 3 and 4 (non-visbroken). It is seen that in each pair the low ratio sample exhibits the least amount of stress whitening. Allowance should be made for the significant $F_c$ difference for the comparison of 1 and 2, since sample 1 would be expected to have <u>higher</u> stress whitening than sample 2 on the basis of its substantially higher $F_c$.

EXAMPLE VI

A polypropylene sample was prepared as in Example III with an intrinsic viscosity ratio of 1.08, $F_c$=25 and $E_c$=57.

Samples 1A to 1E were compounded in the proportions shown in Table VI below. Samples 1A and 1B were controls without sodium benzoate. Calcium stearate is a well known acid acceptor or neutralizer and also lubricates the molded surface, acting as a mold release agent. Calcium stearate cannot be used with sodium benzoate, however, since the calcium stearate causes the sodium benzoate to lose its efficiency as a nucleating agent. Acrawax C (ethylene-bis-stearamide) was added as a lubricant instead of calcium stearate to compositions containing sodium benzoate.

It can be seen from the data that the flexural moduli for samples 1C, 1D and 1E increase significantly with corresponding increases in the Izod impact strength. The effect of the nucleating agent can also be seen in the higher crystallization temperatures for Examples 1C, 1D and 1E.

TABLE VI

| Sample | 1A | 1B | 1C | 1D | 1E |
|---|---|---|---|---|---|
| Goodrite 3114 (ppm) | 1000 | 1000 | 1000 | 1000 | 1000 |
| Irganox 168 (ppm) | 1000 | 1000 | 1000 | 1000 | 1000 |
| Ca Stearate (ppm) | 800 | 800 | - | - | - |
| Glycerol Monostearate (ppm) | - | 3000 | - | 3000 | 3000 |
| Sodium Benzoate (ppm) | - | - | 400 | 400 | 400 |
| Acrawax C (ppm) | - | - | 500 | - | 500 |
| | | | | | |
| Melt Flow | 4.3 | 4.7 | 4.7 | 4.4 | 4.6 |
| 1% Secant Flexural | 7.72 | 8.13 | 8.96 | 9.23 | 8.96 |
| Mod. Pa x $10^{-2}$ (psi x $10^{-5}$) | (1.12) | (1.18) | (1.30) | (1.34) | (1.30) |
| | | | | | |
| Notched Izod 23°C | 5.34 | 5.34 | 6.94 | 6.94 | 6.94 |
| J/cm (ft. lb/in) | (10) | (10) | (13) | (13) | (13) |
| 0°C | 2.30 | 2.03 | 4.17 | 4.27 | 4.38 |
| | (4.3) | (3.8) | (7.8) | (8.0) | (8.2) |
| 20°C | 0.43 | 0.37 | 0.43 | 2.08 | 2.03 |
| | (0.8) | (0.7) | (0.8) | (3.9) | (3.8) |
| | | | | | |
| Gardner Impact at | >346 | >346 | >346 | >346 | >346 |
| -30°C kg-cm (in-lb) | (>300) | (>300) | (>300) | (>300) | (>300) |
| | | | | | |
| Stress Whitening | 1.28 | 1.28 | 1.52 | cm at | 11.52 |
| kg-cm1.57 1.52 | (0.505) | (0.505) | (0.600) | (0.620) | (0.600) |
| (inches at 10 in-lb) | | | | | |
| | | | | | |
| Differential scanning Calorimeter PP Crystallization T (°C) | - | 112 | 127 | 125 | 125 |

**EXAMPLE VII**

A polypropylene sample was prepared as above with an intrinsic viscosity ratio of 1.19, $F_c$=25.5 and $E_c$=50.

Samples A to M were compounded in the proportions shown in Table VII below. Samples A to C were controls without nucleating agent. As in Example VI, the controls contained calcium stearate, as well as other additives. Samples D to K contained sodium benzoate as the nucleating agent, along with other additives. Samples L and M contained Millad 3905 (1,3,2,4-dibenzylidene sorbitol) as the nucleating agent together with other additives.

The data show that sodium benzoate enhances both the flexural modulus and the notched Izod impact strength at 0°C. The Millad 3905 enhanced the notched Izod impact strength at 0°C and moderately enhanced the flexural modulus. All compositions showed good stress whitening resistance.

**TABLE VII**

| Sample | A | B | C | D | E | F | G | H | I | J | K | L | M |
|---|---|---|---|---|---|---|---|---|---|---|---|---|---|
| Goodrite 3114 (ppm) | 1000 | 1000 | 1000 | 1000 | 1000 | 1000 | 1000 | 1000 | 1000 | 1000 | | 1000 | 1000 |
| Irganox 168 (ppm) | 1000 | 1000 | 1000 | 1000 | 1000 | 1000 | 1000 | 1000 | 1000 | 1000 | 1000 | 1000 | 1000 |
| Ca Stearate (ppm) | 800 | 800 | 800 | | | | | | | | | 800 | 800 |
| Glycerol Monostearate (ppm) (1) | | 3000 | | | | | 3000 | 3000 | | 3000 | 3000 | | 3000 |
| Sodium Benzoate (ppm) | | | | 400 | 1000 | 400 | 1000 | 400 | 400 | 1000 | 1000 | | |
| Acrawax C (ppm) | | | | 500 | 500 | | | | 500 | 500 | 500 | | |
| Irganox 1010 | | | | | | | | | | | 1000 | | |
| Glycerol Monostearate (ppm) (2) | | | 3000 | | | | | | 3000 | | | | |
| Millad 3905 (ppm) | | | | | | | | | | | | 2500 | 2500 |
| | | | | | | | | | | | | | |
| Properties | | | | | | | | | | | | | |
| Melt Flow g/min(dg/min) | 0.44 | 0.43 | 0.42 | 0.41 | 0.40 | 0.42 | 0.42 | 0.43 | 0.43 | 0.44 | 0.41 | 0.41 | 0.42 |
| | (4.4) | (4.3) | (4.2) | (4.1) | (4) | (4.2) | (4.2) | (4.3) | (4.3) | (4.4) | (4.1) | (4.1) | (4.2) |
| 1% Secant Flexural Modulus | 730 | 723 | 758 | 847 | 889 | 909 | 958 | 896 | 854 | 937 | 889 | 820 | 827 |
| Pa(psi x 10$^{-3}$) | (105) | (105) | (110) | (123) | (129) | (132) | (139) | (130) | (124) | (136) | (129) | (119) | (120) |
| Notched Izod @ 23°C J/cm (ft lb/in) | INC | INC | INC | TIC | TIC | TIC | TIC | TIC | TIC | TIC | TIC | TIC | TIC |
| Notched Izod @ 0°C J/cm | 1.28 | 1.17 | 0.53 | 3.42 | 4.06 | 4.11 | 3.79 | 4.38 | 3.90 | 4.91 | 5.23 | 4.43 | 4.65 |
| (ft lb/in) | (2.4) | (2.2) | (1.0) | (6.4) | (7.6) | (7.7) | (7.1) | (8.2) | (7.3) | (9.2) | (9.8) | (8.3) | (8.7) |
| Notched Izod @ -20°C J/cm | 0.27 | 0.27 | 0.32 | 0.32 | 0.37 | 0.32 | 0.37 | 0.27 | 0.32 | 0.32 | 0.32 | 0.32 | 0.27 |
| (ft lb/in) | (0.5) | (0.5) | (0.6) | (0.6) | (0.7) | (0.6) | (0.7) | (0.5) | (0.6) | (0.6) | (0.6) | (0.6) | (0.5) |
| Gardner @ -30°C (in-lb) | >346 | >346 | >346 | >346 | >346 | >346 | >346 | >346 | >346 | >346 | >346 | >346 | >346 |
| | (>300) | (>300) | (>300) | (>300) | (>300) | (>300) | (>300) | (>300) | (>300) | (>300) | (>300) | (>300) | (>300) |
| Gardner @ -40°C (in-lb) | 173 | 86 | 184 | 161 | 138 | 92 | 150 | 184 | 150 | 184 | 196 | 161 | 230 |
| | (150) | (75) | (160) | (140) | (120) | (80) | (130) | (160) | (130) | (160) | (170) | (140) | (200) |
| Blush 10" lbs cm (in) | 1.55 | 1.55 | 1.55 | 1.55 | 1.55 | 1.55 | 1.55 | 1.55 | 1.55 | 1.55 | 1.55 | 1.55 | 1.55 |
| | (0.61) | (0.61) | (0.61) | (0.61) | (0.61) | (0.61) | (0.61) | (0.61) | (0.61) | (0.61) | (0.61) | (0.61) | (0.61) |
| Blush 20" lbs cm (in) | 1.80 | 1.80 | 1.80 | 1.80 | 1.80 | 1.80 | 1.80 | 1.80 | 1.80 | 1.80 | 1.80 | 1.80 | 1.80 |

(continued)

| Sample | A | B | C | D | E | F | G | H | I | J | K | L | M |
|---|---|---|---|---|---|---|---|---|---|---|---|---|---|
| | (0.71) | (0.71) | (0.71) | (0.71) | (0.71) | (0.71) | (0.71) | (0.71) | (0.71) | (0.71) | (0.71) | (0.71) | (0.71) |

(1) Supplier - Lonza Chemical
(2) Supplier - Eastman Kodak
INC - Incomplete break (tough, greater than 8.0)
TIC - Twists in clamp (very tough)

**Claims**

1. A polypropylene impact composition which comprises a homopolymer phase predominantly comprising a propylene homopolymer and from 10% to 50% based on the weight of the total impact copolymer composition of a copolymer phase predominantly comprising a copolymer of ethylene and propylene wherein the copolymer phase contains from 35 to 50% by weight of ethylene based on total copolymer phase, and wherein the ratio of the intrinsic viscosity of the copolymer phase to that of the homopolymer phase is from 1.0/1 to 1.3/1, the intrinsic viscosities being determined according to ASTM D 1601-78 in decalin at 135°C, that of the copolymer phase ($[\eta]_{copol}$) being derived from the intrinsic viscosity of the composition ($[\eta]_{prod}$) in accordance with the formula

$$[\eta]_{copol} = \frac{[\eta]_{prod} - (1-F_c) \ [\eta]_{homo}}{F_c}$$

where ($[\eta]_{homo}$) is the intrinsic viscosity of the homopolymer phase and $F_c$ is the fraction of the composition which is copolymer; with the proviso that the composition does not consist of 72 weight percent of a propylene homopolymer phase containing 0.5 weight percent ethylene and having an intrinsic viscosity of 1.87 dl/g and 28 weight percent of a propylene copolymer phase containing 39 weight percent of ethylene and having an intrinsic viscosity of 2.16.

2. A composition according to claim 1, which further comprises a nucleating agent.

3. A polypropylene impact composition which comprises a homopolymer phase predominantly comprising a propylene homopolymer, from 10% to 50% based on the weight of the total impact copolymer composition of a copolymer phase predominantly comprising a copolymer of ethylene and propylene wherein the copolymer phase contains from 35 to 50% by weight of ethylene based on total copolymer phase, and wherein the ratio of the intrinsic viscosity of the copolymer phase to that of the homopolymer phase is from 1.0/1 to 1.3/1, the intrinsic viscosities being determined according to ASTM D 1601-78 in decalin at 135°C, that of the copolymer phase ($[\eta]_{copol}$) being derived from the intrinsic viscosity of the composition ($[\eta]_{prod}$) in accordance with the formula

$$[\eta]_{copol} = \frac{[\eta]_{prod} - (1-F_c) \ [\eta]_{homo}}{F_c}$$

where ($[\eta]_{homo}$) is the intrinsic viscosity of the homopolymer phase and $F_c$ is the fraction of the composition which is copolymer;
and wherein the polypropylene impact composition further comprises a nucleating agent.

4. A composition according to claim 2 or 3 wherein the concentration of nucleating agent is from 50 to 5000 ppm.

5. A composition according to claim 4 wherein the concentration of nucleating agent is from 200 to 2000 ppm.

6. A composition according to any one of claims 2 to 5 wherein the nucleating agent is sodium benzoate.

7. A composition according to any one of the preceding claims wherein the homopolymer phase contains up to 6.0 weight percent ethylene.

8. A composition according to any one of the preceding claims wherein the intrinsic viscosity ratio is from 1.0/1 to 1.2/1.

9. A composition according to any one of the preceding claims wherein the composition is obtainable by a two-stage polymerization process.

10. A composition according to claim 9 wherein the two-stage polymerization process is a gas phase process wherein predominantly propylene is initially polymerized to form the homopolymer phase and the product of the initial polymerization is contacted with a mixture of propylene and ethylene to form the copolymer phase, the polymerizations being conducted in the presence of an olefin polymerization catalyst and the molecular weight of at least one of the homopolymer phase and the copolymer phase being controlled to provide said intrinsic viscosity ratio.

**11.** A composition according to claim 10 wherein both stages are conducted in the presence of a fluidized bed olefin polymerization catalyst.

**12.** A composition according to claim 10 or 11 wherein the molecular weight is controlled by the addition of molecular hydrogen to at least one polymerization.

**13.** A composition obtainable by visbreaking a polypropylene impact copolymer as claimed in any one of the preceding claims to provide a visbroken composition having a melt flow of from 2 to 200 according to ASTM-1238, condition L.

**14.** A composition according to claim 13 wherein the viscosity ratio of the starting propylene polymer composition is from 1/1 to 1.1/1.

**15.** Shaped articles of a composition as claimed in any one of the preceding claims.

**16.** A process for preparing a polypropylene impact composition which comprises a homopolymer phase predominantly comprising a propylene homopolymer and from 10% to 50% based on the weight of the total impact copolymer composition of a copolymer phase predominantly comprising a copolymer of ethylene and propylene wherein the copolymer phase contains from 35 to 50% by weight of ethylene based on total copolymer phase, and wherein the ratio of the intrinsic viscosity of the copolymer phase to that of the homopolymer phase is from 1.0/1 to 1.3/1, the intrinsic viscosities being determined according to ASTM D 1601-78 in decalin at 135°C, that of the copolymer phase ($[\eta]_{copol}$) being derived from the intrinsic viscosity of the composition ($[\eta]_{prod}$) in accordance with the formula

$$[\eta]_{copol} = \frac{[\eta]_{prod} - (1-F_c) \ [\eta]_{homo}}{F_c}$$

wherein ($[\eta]_{homo}$) is the intrinsic viscosity of the homopolymer phase and $F_c$ is the fraction of the composition which is copolymer;
wherein a two-stage gas-phase polymerization process is carried out wherein predominantly propylene is initially polymerized to form the homopolymer phase and the product of the initial polymerization is contacted with a mixture of propylene and ethylene to form the copolymer phase, the polymerizations being conducted in the presence of an olefin polymerization catalyst and the molecular weight of at least one of the homopolymer phase and the copolymer phase being controlled to provide said intrinsic viscosity ratio.

**17.** A process according to claim 16 wherein both stages are conducted in the presence of a fluidized bed olefin polymerization catalyst.

**18.** A process according to claim 16 or 17 wherein the molecular weight is controlled by the addition of molecular hydrogen to at least one polymerization.

**19.** A process according to any one of claims 16 to 18 which further comprises visbreaking the polypropylene impact copolymer to provide a visbroken composition having a melt flow of from 2 to 200 according to ASTM-1238, condition L.

**20.** A process according to claim 19 wherein the viscosity ratio of the starting propylene polymer composition is from 1/1 to 1.1/1.

**Patentansprüche**

**1.** Schlagfeste Polypropylenzusammensetzung, die eine Homopolymerphase umfasst, die vorwiegend ein Propylenhomopolymer umfasst, und bezogen auf das Gewicht der gesamten schlagfesten Copolymerzusammensetzung von 10% bis 50% einer Copolymerphase, die vorwiegend ein Copolymer von Ethylen und Propylen umfasst, wobei die Copolymerphase von 35 bis 50 Gew.-% Ethylen enthält, bezogen auf die gesamte Copolymerphase, und wobei das Verhältnis der Intrinsic-Viskosität der Copolymerphase zu der der Homopolymerphase von 1,0/1 bis 1,3/1 beträgt, wobei die Intrinsic-Viskositäten gemäß ASTM D1601-78 in Decalin bei 135°C ermittelt werden und die der Copolymerphase ($[\eta]_{copol}$) hergeleitet wird aus der Intrinsic-Viskosität der Zusammensetzung ($[\eta]_{prod}$) gemäß der Formel

$$[\eta]_{copol} = \frac{[\eta]_{prod} - (1 - F_c) \quad [\eta]_{homo}}{F_c}$$

wo ($[\eta]_{homo}$) die Intrinsic-Viskosität der Homopolymerphase ist und $F_c$ der Anteil der Zusammensetzung ist, der ein Copolymer ist; mit der Maßgabe, dass die Zusammensetzung nicht aus 72 Gew.-% einer Propylenhomopolymerphase besteht, die 0,5 Gew.-% Ethylen enthält und eine Intrinsic-Viskosität von 1,87 dl/g hat, und aus 28 Gew.-% einer Propylencopolymerphase, die 39 Gew.-% Ethylen enthält und eine Intrinsic-Viskosität von 2,16 hat.

2. Zusammensetzung nach Anspruch 1, die ferner einen Keimbildner umfasst.

3. Schlagfeste Polypropylenzusammensetzung, die eine Homopolymerphase umfasst, die vorwiegend ein Propylenhomopolymer umfasst, und bezogen auf das Gewicht der gesamten schlagfesten Copolymerzusammensetzung von 10% bis 50% einer Copolymerphase, die vorwiegend ein Copolymer von Ethylen und Propylen umfasst, wobei die Copolymerphase von 35 bis 50 Gew.-% Ethylen enthält, bezogen auf die gesamte Copolymerphase, und wobei das Verhältnis der Intrinsic-Viskosität der Copolymerphase zu der der Homopolymerphase von 1,0/1 bis 1,3/1 beträgt, wobei die Intrinsic-Viskositäten gemäß ASTM D1601-78 in Decalin bei 135°C ermittelt werden und die der Copolymerphase ($[\eta]_{copol}$) hergeleitet wird aus der Intrinsic-Viskosität der Zusammensetzung ($[\eta]_{prod}$) gemäß der Formel

$$[\eta]_{copol} = \frac{[\eta]_{prod} - (1 - F_c) \quad [\eta]_{homo}}{F_c}$$

wo ($[\eta]_{homo}$) die Intrinsic-Viskosität der Homopolymerphase ist und $F_c$ der Anteil der Zusammensetzung ist, der ein Copolymer ist;
und wobei die schlagfeste Polypropylenzusammensetzung ferner einen Keimbildner umfasst.

4. Zusammensetzung nach Anspruch 2 oder 3, wobei die Konzentration des Keimbildners von 50 bis 5000 ppm beträgt.

5. Zusammensetzung nach Anspruch 4, wobei die Konzentration des Keimbildners von 200 bis 2000 ppm beträgt.

6. Zusammensetzung nach einem der Ansprüche 2 bis 5, wobei der Keimbildner Natriumbenzoat ist.

7. Zusammensetzung nach einem der vorhergehenden Ansprüche, wobei die Homopolymerphase bis zu 6,0 Gew.-% Ethylen enthält.

8. Zusammensetzung nach einem der vorhergehenden Ansprüche, wobei das Intrinsic-Viskositätsverhältnis von 1,0/1 bis 1,2/1 beträgt.

9. Zusammensetzung nach einem der vorhergehenden Ansprüche, wobei die Zusammensetzung durch ein zweistufiges Polymerisationsverfahren erhalten werden kann.

10. Zusammensetzung nach Anspruch 9, wobei das zweistufige Polymerisationsverfahren ein Gasphasenverfahren ist, bei dem zunächst vorwiegend Propylen polymerisiert wird, um die Homopolymerphase zu bilden, und das Produkt der anfänglichen Polymerisation mit einer Mischung von Propylen und Ethylen in Kontakt gebracht wird, um die Copolymerphase zu bilden, wobei die Polymerisationen in Gegenwart eines olefinischen Polymerisationskatalysators durchgeführt werden und das Molekulargewicht mindestens einer von der Homopolymerphase und der Copolymerphase so gesteuert wird, das sich das genannte Intrinsic-Viskositätsverhältnis ergibt.

11. Zusammensetzung nach Anspruch 10, wobei beide Stufen in Gegenwart eines olefinischen Wirbelschicht-Polymerisationskatalysators durchgeführt werden.

12. Zusammensetzung nach Anspruch 10 oder 11, wobei das Molekulargewicht durch Zugabe von molekularem Wasserstoff zu mindestens einer Polymerisation gesteuert wird.

**13.** Zusammensetzung, die man erhalten kann durch Viskositätsbrechen eines schlagfesten Polypropylencopolymers nach einem der vorhergehenden Ansprüche, um eine viskositätsgebrochene Zusammensetzung mit einem Schmelzfluss von 2 bis 200 gemäß ASTM-1238, Bedingung L, bereitzustellen.

**14.** Zusammensetzung nach Anspruch 13, wobei das Viskositätsverhältnis der Propylenpolymer-Ausgangszusammensetzung von 1/1 bis 1,1/1 beträgt.

**15.** Geformte Gegenstände aus einer Zusammensetzung nach einem der vorhergehenden Ansprüche.

**16.** Verfahren zur Herstellung einer schlagfesten Polypropylenzusammensetzung, die eine Homopolymerphase umfasst, die vorwiegend ein Propylenhomopolymer umfasst, und bezogen auf das Gewicht der gesamten schlagfesten Copolymerzusammensetzung von 10% bis 50% einer Copolymerphase, die vorwiegend ein Copolymer von Ethylen und Propylen umfasst, wobei die Copolymerphase von 35 bis 50 Gew.-% Ethylen enthält, bezogen auf die gesamte Copolymerphase, und wobei das Verhältnis der Intrinsic-Viskosität der Copolymerphase zu der der Homopolymerphase von 1,0/1 bis 1,3/1 beträgt, wobei die Intrinsic-Viskositäten gemäß ASTM D1601-78 in Decalin bei 135°C ermittelt werden und die der Copolymerphase ($[\eta]_{copol}$) hergeleitet wird aus der Intrinsic-Viskosität der Zusammensetzung ($[\eta]_{prod}$) gemäß der Formel

$$[\eta]_{copol} = \frac{[\eta]_{prod} - (1 - F_c) \quad [\eta]_{homo}}{F_c}$$

worin ($[\eta]_{homo}$) die Intrinsic-Viskosität der Homopolymerphase ist und $F_c$ der Anteil der Zusammensetzung ist, der ein Copolymer ist;
wobei ein zweistufiges Gasphasen-Polymerisationsverfahren durchgeführt wird, bei dem zunächst vorwiegend Propylen polymerisiert wird, um die Homopolymerphase zu bilden, und das Produkt der anfänglichen Polymerisation mit einer Mischung von Propylen und Ethylen in Kontakt gebracht wird, um die Copolymerphase zu bilden, wobei die Polymerisationen in Gegenwart eines olefinischen Polymerisationskatalysators durchgeführt werden und das Molekulargewicht mindestens einer von der Homopolymerphase und der Copolymerphase so gesteuert wird, dass sich das genannte Intrinsic-Viskositätsverhältnis ergibt.

**17.** Verfahren nach Anspruch 16, wobei beide Stufen in Gegenwart eines olefinischen Wirbelschicht-Polymerisationskatalysators durchgeführt werden.

**18.** Verfahren nach Anspruch 16 oder 17, wobei das Molekulargewicht durch Zugabe von molekularem Wasserstoff zu mindestens einer Polymerisation gesteuert wird.

**19.** Verfahren nach einem der Ansprüche 16 bis 18, das ferner das Viskositätsbrechen des schlagfesten Polypropylencopolymers umfasst, um eine viskositätsgebrochene Zusammensetzung mit einem Schmelzfluss von 2 bis 200 gemäß ASTM-1238, Bedingung L, bereitzustellen.

**20.** Verfahren nach Anspruch 19, wobei das Viskositätsverhältnis der Propylenpolymer-Ausgangszusammensetzung von 1/1 bis 1,1/1 beträgt.

**Revendications**

**1.** Composition de polypropylène de qualité choc, qui comprend une phase d'homopolymère, comprenant en proportion prédominante un homopolymère de propylène, et de 10 à 50 % en poids, par rapport au poids total de la composition de copolymère de qualité choc, d'une phase de copolymère comprenant en proportion prédominante un copolymère d'éthylène et de propylène, laquelle phase de copolymère contient des motifs d'éthylène en une quantité représentant de 35 à 50 % du poids total de la phase de copolymère, et dans laquelle composition le rapport de la viscosité intrinsèque de la phase de copolymère à celle de la phase d'homopolymère vaut de 1,0/1 à 1,3/1, les viscosités intrinsèques étant déterminées dans de la décaline et à 135 °C, selon la norme ASTM D-1601-78, et la viscosité intrinsèque de la phase de copolymère, $[\eta]_{copol}$, étant calculée à partir de celle de la composition, $[\eta]_{prod}$, d'après la relation suivante :

$$[\eta]_{copol} = \frac{[\eta]_{prod} - (1 - F_c)\,[\eta]_{homo}}{F_c}$$

dans laquelle $[\eta]_{homo}$ représente la viscosité intrinsèque de la phase d'homopolymère et Fc représente la fraction de copolymère dans la composition, sous réserve que la composition ne soit pas constituée de 72 % en poids d'une phase d'homopolymère de propylène contenant 0,5 % en poids d'éthylène et présentant une viscosité intrinsèque de 1,87 dL/g et de 28 % en poids d'une phase de copolymère de propylène contenant 39 % en poids d'éthylène et présentant une viscosité intrinsèque de 2,16 dL/g.

2. Composition conforme à la revendication 1, qui comprend en outre un agent de nucléation.

3. Composition de polypropylène de qualité choc, qui comprend une phase d'homopolymère, comprenant en proportion prédominante un homopolymère de propylène, et de 10 à 50 % en poids, par rapport au poids total de la composition de copolymère de qualité choc, d'une phase de copolymère comprenant en proportion prédominante un copolymère d'éthylène et de propylène, laquelle phase de copolymère contient des motifs d'éthylène en une quantité représentant de 35 à 50 % du poids total de la phase de copolymère, et dans laquelle composition le rapport de la viscosité intrinsèque de la phase de copolymère à celle de la phase d'homopolymère vaut de 1,0/1 à 1,3/1, les viscosités intrinsèques étant déterminées dans de la décaline et à 135 °C, selon la norme ASTM D-1601-78, et la viscosité intrinsèque de la phase de copolymère, $[\eta]_{copol}$, étant calculée à partir de celle de la composition, $[\eta]_{prod}$, d'après la relation suivante :

$$[\eta]_{copol} = \frac{[\eta]_{prod} - (1 - F_c)\,[\eta]_{homo}}{F_c}$$

dans laquelle $[\eta]_{homo}$ représente la viscosité intrinsèque de la phase d'homopolymère et Fc représente la fraction de copolymère dans la composition,
et laquelle composition de polypropylène de qualité choc comprend en outre un agent de nucléation.

4. Composition conforme à la revendication 2 ou 3, dans laquelle l'agent de nucléation se trouve en une concentration de 50 à 5000 ppm.

5. Composition conforme à la revendication 4, dans laquelle l'agent de nucléation se trouve en une concentration de 200 à 2000 ppm.

6. Composition conforme à l'une des revendications 2 à 5, dans laquelle l'agent de nucléation est du benzoate de sodium.

7. Composition conforme à l'une des revendications précédentes, dans laquelle la phase d'homopolymère contient jusqu'à 6,0 % en poids de motifs d'éthylène.

8. Composition conforme à l'une des revendications précédentes, dans laquelle le rapport des viscosités intrinsèques vaut de 1,0/1 à 1,2/1.

9. Composition conforme à l'une des revendications précédentes, laquelle composition peut être obtenue par un procédé de polymérisation en deux étapes.

10. Composition conforme à la revendication 9, pour laquelle le procédé de polymérisation en deux étapes est un procédé en phase gazeuse, dans lequel on fait initialement polymériser du propylène en proportion prédominante, de manière à former la phase d'homopolymère, et l'on met le produit de cette polymérisation initiale en contact avec un mélange de propylène et d'éthylène, de manière à former la phase de copolymère, ces polymérisations étant effectuées en présence d'un catalyseur de polymérisation d'oléfines, et la masse moléculaire d'au moins l'une des phases d'homopolymère et de copolymère étant maîtrisée de manière à ce qu'on obtienne ledit rapport de viscosités intrinsèques.

**11.** Composition conforme à la revendication 10, pour laquelle les deux étapes sont effectuées en présence d'un catalyseur de polymérisation d'oléfines en lit fluidisé.

**12.** Composition conforme à la revendication 10 ou 11, pour laquelle la masse moléculaire est maîtrisée par addition d'hydrogène moléculaire au cours d'au moins l'une des polymérisations.

**13.** Composition qu'on peut obtenir par viscoréduction d'un copolymère polypropylène de qualité choc, conforme à l'une des revendications précédentes, de manière à obtenir une composition viscoréduite présentant un indice de fluidité à chaud, mesuré selon la norme ASTM 1238, condition L, de 2 à 200.

**14.** Composition conforme à la revendication 13, pour laquelle le rapport des viscosités, dans la composition initiale de polymères de propylène, vaut de 1/1 à 1,1/1.

**15.** Articles façonnés en une composition conforme à l'une des revendications précédentes.

**16.** Procédé de préparation d'une composition de polypropylène de qualité choc, qui comprend une phase d'homopolymère, comprenant en proportion prédominante un homopolymère de propylène, et de 10 à 50 % en poids, par rapport au poids total de la composition de copolymère de qualité choc, d'une phase de copolymère comprenant en proportion prédominante un copolymère d'éthylène et de propylène, laquelle phase de copolymère contient des motifs d'éthylène en une quantité représentant de 35 à 50 % du poids total de la phase de copolymère, et dans laquelle composition le rapport de la viscosité intrinsèque de la phase de copolymère à celle de la phase d'homopolymère vaut de 1,0/1 à 1,3/1, les viscosités intrinsèques étant déterminées dans de la décaline et à 135 °C, selon la norme ASTM D-1601-78, et la viscosité intrinsèque de la phase de copolymère, $[\eta]_{copol}$, étant calculée à partir de celle de la composition, $[\eta]_{prod}$, d'après la relation suivante :

$$[\eta]_{copol} = \frac{[\eta]_{prod} - (1 - F_c)\,[\eta]_{homo}}{F_c}$$

dans laquelle $[\eta]_{homo}$ représente la viscosité intrinsèque de la phase d'homopolymère et $F_c$ représente la fraction de copolymère dans la composition,
et dans lequel procédé l'on met en oeuvre un procédé de polymérisation en phase gazeuse en deux étapes, dans lequel on fait initialement polymériser du propylène en proportion prédominante, de manière à former la phase d'homopolymère, et l'on met le produit de cette polymérisation initiale en contact avec un mélange de propylène et d'éthylène, de manière à former la phase de copolymère, ces polymérisations étant effectuées en présence d'un catalyseur de polymérisation d'oléfines, et la masse moléculaire d'au moins l'une des phases d'homopolymère et de copolymère étant maîtrisée de manière à ce qu'on obtienne ledit rapport de viscosités intrinsèques.

**17.** Procédé conforme à la revendication 16, dans lequel les deux étapes sont effectuées en présence d'un catalyseur de polymérisation d'oléfines en lit fluidisé.

**18.** Procédé conforme à la revendication 16 ou 17, dans lequel la masse moléculaire est maîtrisée par addition d'hydrogène moléculaire au cours d'au moins l'une des polymérisations.

**19.** Procédé conforme à l'une des revendications 16 à 18, qui comporte en outre le fait d'opérer une viscoréduction du copolymère polypropylène de qualité choc, de manière à obtenir une composition viscoréduite présentant un indice de fluidité à chaud, mesuré selon la norme ASTM 1238, condition L, de 2 à 200.

**20.** Procédé conforme à la revendication 19, dans lequel le rapport des viscosités, dans la composition initiale de polymères de propylène, vaut de 1/1 à 1,1/1.

## REFERENCES CITED IN THE DESCRIPTION

**Patent documents cited in the description**

- US 3514501 A
- EP 208330 A
- JP 8402052204 A
- EP 433990 A
- US 4728705 A
- EP 225099 A
- US 4379759 A